# EUROPÄISCHE PATENTSCHRIFT

(11) **EP 0 515 659 B1**
(45) Veröffentlichungstag und Bekanntmachung des Hinweises auf die Patenterteilung: **22.02.1995**
(21) Anmeldenummer: 92902466.9
(22) Anmeldetag: 05.12.1991
(51) Int. Cl.: G01G 19/12, B65F 3/04

(54) **BEHÄLTER-WAAGE**
SCALES FOR CONTAINERS
BASCULE DE PESAGE DE CONTENEURS

(30) Priorität: 17.12.1990 CH 3988/90
(43) Veröffentlichungstag der Anmeldung: 02.12.1992
(73) Patentinhaber: WIRTH GALLO MESSTECHNIK AG, 8032 Zürich (CH)
(72) Erfinder: WIRTH, Johannes, CH-8032 Zürich (CH)
(74) Vertreter: Salgo, Reinhold Caspar, Dr.
(86) Internationale Anmeldenummer: CH9100247
(87) Internationale Veröffentlichungsnummer: WO9211515

(56) Entgegenhaltungen:
- EP-A- 0 186 820
- EP-A- 0 402 352
- WO-A-88/02849
- DE-A- 3 040 979
- DE-A- 3 819 169
- GB-A- 2 190 748

## Beschreibung

Die vorliegende Erfindung betrifft eine Wägeeinrichtung für um eine annähernd horizontale Achse schwenkende Hubeinrichtungen, wie Dosiereinrichtungen, Gusspfannen und Hub- bzw. Entleerungseinrichtungen für Behälter und entsprechende Verfahren.

Vorrichtungen der genannten Gattung sind mehrere bekannt. Zahlreiche Patente wurden erteilt auf Wägeeinrichtungen, wie z.B. Hubstapler, bei denen die zu transportierende und gleichzeitig zu wägende Last nur gehoben werden muss; ferner sind Vorrichtungen bekannt, bei denen das ganze Fahrzeug mitsamt Hubeinrichtung gewogen wird. Kehrichtbehälter-Waagen, die mit der Schwenkvorrichtung verbunden sind, sind bekannt aus den Patentschriften US 4,854,406 und DE 38 19 169 Al. Während die in der DE 38 19 169 Al offenbarte Vorrichtung zur Gattung der Hubstapler-Wägevorrichtungen gehört, kombiniert mit einer an sich bekannten "brutto - Tara = netto" - Gewichtsermittlung, lehrt die US 4,854,406 eine Mehrzahl von Vorrichtungen zur Gewichtsermittlung von verschiedenen Kehrichtbehältern, bei denen grundsätzlich - wie es sich aus der Sache ergibt - eine brutto - Tara - Wägung vorgenommen wird. Zwei der in dieser US-Patentschrift geschilderten Vorrichtungen messen im Prinzip ein Drehmoment; das Messergebnis ist also von der Schwerpunktslage des Kehrichtbehälters abhängig. Eine der beschriebenen Vorrichtungen gehört in die Gattung der Hubstapler-Waagen und jene zur Wägung von fahrbaren Mülltonnen ist mit unbestimmten Reibungskräften behaftet, die nicht mitgemessen werden. Allen gemeinsam ist ein aufwendiges Betriebskonzept mit ausgewählten Messstellungen, die durch nockenbetätigte Schalter definiert werden. Beim rauhen Betrieb, der beim Einsammeln von Kehricht herrscht, sind Fehlfunktionen der beschriebenen Vorrichtungen naheliegend.

Die Aufgabe, die mit der vorliegenden Erfindung gelöst werden soll, besteht in der Schaffung einer Wägeeinrichtung mit mindestens einem Schwenkarm, die das Gewicht des Behälters bei normalem Betrieb der Anlage in einem zweckmässigen Bereich stellungs- und bewegungsunabhängig ermittelt. Die Lösung geschieht nach dem Anspruch 1. Verfahren sind in den Ansprüchen 9, 10, 11 angegeben.

Anhand der beiliegenden Zeichnung wird der Erfindungsgedanke, beruhend auf mehreren Ausführungsbeispielen, näher erläutert.

Es zeigen
- Fig. 1: ein erstes und ein zweites Ausführungsbeispiel als Behälter-Waage,
- Fig. 2: ein Detail zum zweiten Ausführungsbeispiel,
- Fig. 3a, b: ein drittes Ausführungsbeispiel als Gusspfannenwaage.

An einem Kehrichtsammelfahrzeug 1 ist ein Lade-, Schwenk- und Entleerungsmechanismus angebracht bestehend aus einem Schwenkarm 2 und einem Hydraulikzylinder 3. Beide sind doppelt ausgeführt und beidseitig des Kehrichtsammelfahrzeuges 1 angelenkt. An jedem Schwenkarm 2 ist - in der Regel starr - eine Greifergabel 4 befestigt. Zur Aufnahme eines fahrbaren Behälters 5 wird die Greifergabel etwa in horizontale Stellung gebracht und der Behälter 5 in die Greifergabel 4 eingefahren. Anschliessend wird durch Steigerung des Arbeitsdruckes des Hydraulikzylinders 3 der Schwenkarm 2 um eine am Kehrichtsammelfahrzeug 1 befindliche Achse 6 geschwenkt, bis der Kehricht aus dem Behälter 5 herausfällt. Auf besondere Ausgestaltungen des Kehrichtsammelfahrzeuges 1 in bezug auf Schiebedeckel und des Behälters 5 wird hier nicht eingegangen, da solche Ausgestaltungen die Erfindung nicht berühren. Dies gilt ebenfalls in entsprechender Weise für die folgenden Ausführungsbeispiele.

Am Schwenkarm 2 und in diesen integriert befindet sich eine parallelogrammartig ausgestaltete Partie. Zwei im wesentlichen parallele Biegestäbe 7 bilden die Primärfedern einer elastischen Untersetzung. Der zwischen Achse 6 und den Biegestäben 7 liegende Teil des Schwenkarmes 2 wird als innerer Abschnitt 9, der zwischen den Biegefedern 7 und der Greifergabel 4 liegende Teil als äusserer Abschnitt 10 bezeichnet. Die Biegestäbe 7 tragen den Hauptanteil der am vorderen Ende des einen Greiferarms angreifenden Gewichtskraft, also des Gewichts des Behälters 5, der Greifergabeln 4 und des äusseren Abschnittes 10. Diese Lastanteile werden ab hier mit "Last" bezeichnet. Im wesentlichen parallel zu den Biegestäben 7 laufen zwei Federzungen 8, die die Sekundärfedern der genannten elastischen Untersetzung bilden; die obere Federzunge 8 geht in diesem Ausführungsbeispiel vom inneren Abschnitt 9 aus, die untere vom äusseren Abschnitt 10. Zwischen den Federzungen 8 ist ein Kraftaufnehmer 11 eingebaut mittels zweier Stelzen 12. Der Kraftaufnehmer 11 ist beispielsweise, jedoch ohne Einschränkung, vom Typ mit mindestens einer querschwingenden Saite. Durch die Bauweise der aus den Biegestäben 7, den Federzungen 8 und dem Kraftaufnehmer 11 bestehenden Lastmessvorrichtung werden nur Kräfte oder Kraftanteile gemessen, die in einer mit W bezeichneten Wirkungsgeraden verlaufen. In dieser Wirkungsgeraden W liegen auch die beiden Stelzen 12; die Biegestäbe 7 und die Federzungen 8 verlaufen im wesentlichen senkrecht zur Wirkungsgeraden W. Wird der äussere Abschnitt 10 belastet, so biegen sich die Biegestäbe 7 nach unten. Dadurch wirkt nun zwischen den Federzungen 8 eine Zugkraft, oder, falls sie auf Druck vorgespannt sind, wird diese Vorspannkraft nun vermindert. Die geringe Eigenelastizität des Kraftaufnehmers 11 ist Bestandteil der Nachgiebigkeit der Federzungen 8.

Eine Variante zur gezeichneten Anordnung besteht darin, dass die obere Federzunge 8 am äusseren Abschnitt 10, die untere Federzunge 8 am inneren Abschnitt 9 befestigt ist. Dann bewirkt eine Last am äusseren Abschnitt 10 eine Druckkraft zwischen den Federzungen 8.

Beim Entleerungsvorgang sind im wesentlichen drei Stellungen zu unterscheiden. In der ersten, mit L bezeichneten Stellung wird der Behälter 5 in die Greifergabeln 4 eingefahren. Wird er anschliessend so weit gehoben, dass er den Boden gerade nicht mehr berührt, so wirkt auf die beschriebene Lastmessvorrichtung in Richtung der Wirkungsgeraden W eine Kraft, die erheblich kleiner ist als die Last. Die gemessene Kraft steigt während des Hubvorganges, bis sie in der mit M bezeichneten Stellung des Schwenkarmes 2 ihr Maximum erreicht; dann nämlich, wenn die Wirkungsgerade W mit der Richtung der Schwerebeschleunigung zusammenfällt. Bei weiterem Anheben des Schwenkarmes 2 fällt die gemessene Kraft wieder ab.

Das mit dem beschriebenen Ausführungsbeispiel verbundene Messverfahren besteht darin, dass während des Schwenkvorganges laufend die in Richtung der Wirkungsgeraden W wirkende Kraft ermittelt und jedes Messresultat mit dem vorhergehenden verglichen wird. Das Maximalresultat entspricht der Last. Beim Senken des Schwenkarmes 2 - nach erfolgtem Entleeren des Behälters 5 - wird nach dem gleichen Muster verfahren. Die Differenz der zwei Maximalwerte entspricht der Nettolast, also dem Gewicht des entleerten Kehrichts. Die zur Gewichtsermittlung und Ablaufsteuerung notwendigen elektronischen Rechenmittel sind an sich bekannt und werden hier nicht dargestellt.

Es ist selbstverständlich im Erfindungsgedanken mitenthalten, einen anfänglich leeren Behälter 5 zu heben, der in gehobenener Stellung von beispielsweise einer Dosiervorrichtung beschickt wird, und ihn anschliessen voll wieder zu senken. Die Tarawägung erfolgt dann zuerst,die Bruttowägung anschliessend.

Ebenfalls im Erfindungsgedanken enthalten ist die Summation der Messresultate der zwei Lastmessvorrichtungen, die bei einer erfindungsgemässen Wägeeinrichtung mit zwei Schwenkarmen 2 vorgesehen sind.

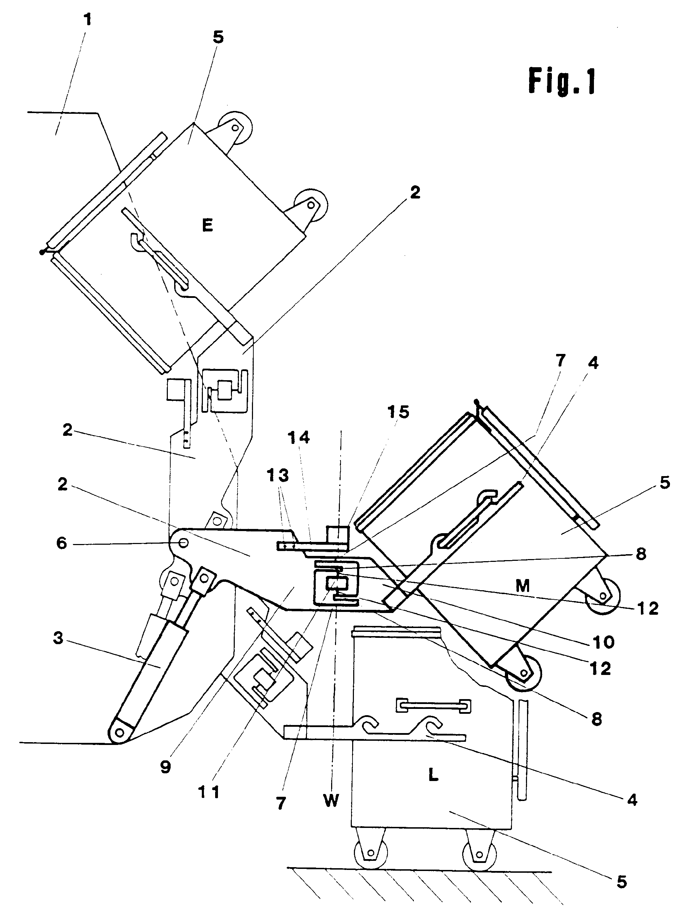

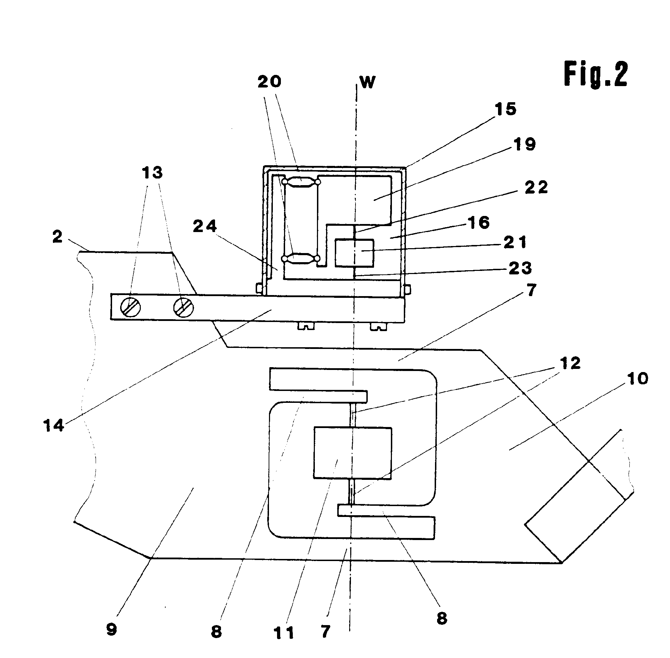

Anhand eines bisher nicht erwähnten Teiles von Fig. 1 und, mehr im Detail anhand von Fig. 2, wird ein zweites Ausführungsbeispiel des Erfindungsgedankens beschrieben. Am inneren Abschnitt 9 des Schwenkarmes 2 ist, beispielsweise mittels Schrauben 13, eine Konsole 14 befestigt, die ein schematisch dargestelltes Gehäuse 15 trägt. Dieses Gehäuse birgt - wie in Fig. 2 dargestellt - einen Beschleunigungsmesser 16, mit einem Gestell 24, das auf der Konsole beispielsweise angeschraubt ist. Der Beschleunigungsmesser 16 besteht aus einer Referenzmasse 19,die mittels zweier im wesentichen paralleler Lenker 20 am Gestell 24 angelenkt ist. Die in Richtung der Wirkungsgeraden W wirkende Komponente der Gewichtskraft der Referenzmasse 19 drückt über eine erste Stelze 22 auf einen Kraftaufnehmer 21, der sich über eine weitere Stelze 23 auf dem Gestell 24 abstützt. Die beiden Stelzen 22, 23 verlaufen untereinander in der gleichen Achse, die auch mit der Richtung der Wirkungsgeraden W und der Richtung der virtuellen Bewegung der Referenzmasse 19 übereinstimmt. Der Kraftaufnehmer 21 ist vorzugsweise von der gleichen Art, wie der Kraftaufnehmer 11, also beispielsweise, aber ohne Einschränkung, vom Typ mit mindestens einer querschwingenden Saite. Die Abmessungen der Konsole 14 sind so, dass die Wirkungslinien W der beiden Kraftaufnehmer 11, 21 zusammenfallen oder mindestens parallel sind. Dadurch wird bewirkt, dass die beiden Kraftmesser - also der Beschleunigungsmesser 16 und der im Schwenkarm 2 integrierte - wegen des zwangsläufig gleichen Neigungswinkels die gleichen Bruchteile der an ihnen wirkenden Gewichtskräfte messen. Die Gewichtskraft der Referenzmasse 19 wird rechnerisch auf den Wert "1" normiert, was der Vertikalstellung der Wirkungsgeraden W entspricht. Wird nun der Schwenkarm 2 gedreht, oder steht das Kehrichtsammelfahrzeug 1 schief - in einer oder beiden Achsen - so bleibt das Verhältnis der gemessenen Kräfte konstant. Es handelt sich also hier um eine echte Wägung im Sinne eines Massenvergleichs.

Da elastische Vorspannkräfte kleine Abweichungen von der Konstanz des Massenverhältnisses mit sich bringen können, ist es zweckmässig, den Messbereich einzuschränken, beispielsweise auf einen Winkel von ± 20° in bezug auf die Vertikalrichtung der Wirkungsgeraden W. Dies gelingt durch Schrankensetzung für das Messergebnis des Beschleunigungsmessers 16. Eine Schranke von 0.940 bei einer Normierung auf 1.000 entspricht einer Einschränkung des Messbereiches auf etwa ± 20°.

Die Anordnung gemäss Fig. 1 und 2 hat überdies den Vorteil, dass die Beschleunigungszustände beim Schwenken ausser Betracht fallen. Es ist ferner mit bekannten Mitteln möglich, die Erschütterungen, die beim Betrieb auftreten, rechnerisch weitgehend unwirksam zu machen.

Das dem zweiten Ausführungsbeispiel gemäss Fig. 1 und 2 entsprechende Messverfahren beruht also auf der Bildung des Verhältnisses der Resultate der beiden Kraftmessvorrichtungen unter der Einschränkung auf einen zweckmässigen Winkelbereich von beispielsweise ± 20 zur Vertikalrichtung der Wirkungsgeraden W. Die Massenermittlung des Kehrichts geschieht durch eine Bruttowägung beim Anheben des Behälters 5 und einer Tarawägung beim Absenken nach erfolgter Leerung.

Auch bei diesem Verfahren ist im Erfindungsgedanken die Summation der Messresultate der zwei Lastmessvorrichtungen enthalten, die bei einer erfindungsgemässen Wägeeinrichtung mit zwei Schwenkarmen 2 vorgesehen sind.

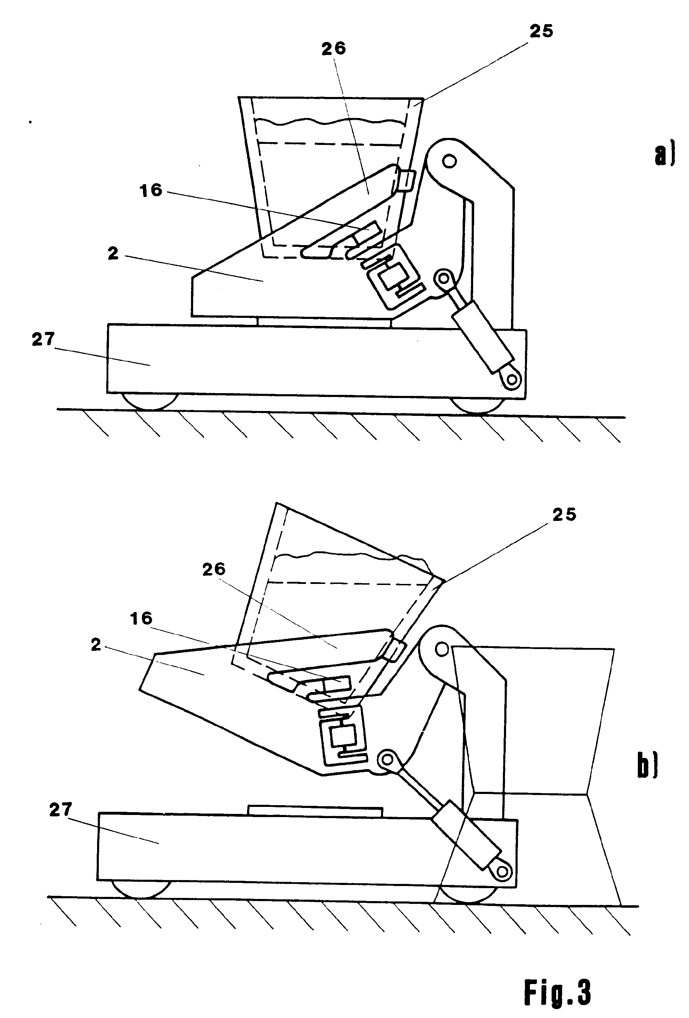

Ein drittes Ausführungsbeispiel ist in Fig. 3a, b dargestellt. Der Schwenkarm 2 mit integrierter Lastmessvorrichtung und der Beschleunigungsmesser 16 sind hier Bestandteil einer Hebe- und Kippvorrichtung für Gusspfannen, die an einem entsprechenden und schematisch dargestellten Transportfahrzeug 27 angebracht sind. Der Schwenkarm 2 trägt eine Gabel 26, die eine Gusspfanne 25 aufnimmt. Der Schwenkarm 2 wird durch hydraulische Mittel 28 geschwenkt, und die Gusspfanne 25 damit in Arbeitsstellung gebracht. Wie schon im ersten Ausführungsbeispie sind Schwenkarm 2, hydraulische Mittel 28 und der im Schwenkarm integrierte Kraftmesser doppelt ausgeführt.Da die erfindungsgemäss Vorrichtung nur die Kräfte parallel zur Wirkungsgeraden misst, fallen Schwerpunktsverlagerungen, die beim Giessen auftreten, ausser Betracht. Entsprechendes gilt selbstredend auch für die anderen Ausführungsbeispiele.

Anstelle der Gusspfanne 25 kann auch ein Dosierbehälter treten, der schüttfähige Güter aufnehmen oder abgeben kann.

Ein grosser Vorteil der erfindungsgemässen Wägevorrichtung liegt darin, dass die Schwenkarme 2 der verschiedenen Hubvorrichtungen leicht und ohne Eingriffe in die Struktur und Mechanik der Schwenkarme oder anderer Anlageteile mit einem Kraftmesser ausgestattet bzw. nacherüstet werden können, sofern die Konstruktion von Anfang an dieser Möglichkeit Rechnung trägt. Ferner sind allfällige Unterhalts- und Austauscharbeiten an den Kraftmessern sehr erleichtert, da nicht in den konstruktiven Aufbau der Schwenkarme eingegriffen werden muss.

## Patentansprüche

1. Wägeeinrichtung für um eine annähernd horizontale Achse (6) schwenkende Hubeinrichtung für Behälter (5) mit mindestens einem Schwenkarm (2) und elektronischen Mitteln zur Berechnung und Speicherung der Wägeresultate, dadurch gekennzeichnet, dass
- der Schwenkarm (2) eine Kraftmessvorrichtung, durch die der gesamte Kraftfluss des Schwenkarmes fliesst, integriert enthält, die besteht aus zwei im wesentlichen parallelen Biegestäben (7), die zusammen die Primärfeder einer elastischen Kraftuntersetzung bilden, aus zwei untereinander und zu den Biegestäben (7) parallelen Federzungen (8), die zusammen die Sekundärfeder der elastischen Kraftuntersetzung bilden, zwischen welchen Federzungen (8) ein Kraftaufnehmer (11) eingebaut ist, dessen Kraftmessrichtung eine Wirkungsgerade W definiert, wobei die eine Federzunge (8) am achsseitigen Teil, die andere am lastseitigen Teil des Schwenkarmes (2) befestigt ist,
- die zwei Biegestäbe (7) Bestandteile des Schwenkarmes (2) und so darin integriert sind, dass sie in einer mittleren Arbeitsstellung des Schwenkarmes (2) horizontal liegen,
- der Kraftaufnehmer (11) so zwischen die Federzungen (8) eingebaut ist, dass die auf ihn wirkende Kraft, und damit auch die Wirkungsgerade W, senkrecht steht auf der Richtung der Biegestäbe (7), er also in der genannten mittleren Arbeitsstellung des Schwenkarmes (2) eine vertikal verlaufende Kraft misst.

2. Wägeeinrichtung nach Patentanspruch 1, dadurch gekennzeichnet, dass die in der mittleren Arbeitsstellung des Schwenkarmes (2) obere Federzunge (8) achsseitig, die untere Federzunge (8) lastseitig am Schwenkarm (2) befestigt ist.

3. Wägeeinrichtung nach Patentanspruch 1, dadurch gekennzeichnet, dass die in der mittleren Arbeitsstellung des Schwenkarmes (2) untere Federzunge (8) achsseitig, die obere Federzunge (8) lastseitig am Schwenkarm (2) befestigt ist.

4. Wägeeinrichtung nach Patentanspruch 1, dadurch gekennzeichnet, dass der Kraftaufnehmer (11) ein Kraftaufnehmer mit mindestens einer querschwingenden Saite ist.

5. Wägeeinrichtung nach einem der Patentansprüche 1 bis 4 , dadurch gekennzeichnet, dass die Wägeeinrichtung zwei parallelarbeitende und um die gleiche Achse (6) drehbare Schwenkarme auf weist.

6. Wägeeinrichtung nach Patentanspruch 6, dadurch gekennzeichnet, dass die Messresultate der beiden Kraftaufnehmer (11) zur Ermittlung des Gesamtgewichtes addiert werden.

7. Wägeeinrichtung nach Patentanspruch 1, dadurch gekennzeichnet, dass
- ein Beschleunigungsmesser (16) vorhanden und am Schwenkarm (2) befestigt ist,
- dieser Beschleunigungsmesser (16) besteht aus einem Gestell (21) an welchem mittels zweier im wesentlichen paraller Lenker (20) eine Referenzmasse (19) gelenkig geführt ist, die über eine erste Stelze (22) auf einen Kraftaufnehmer (21) drückt, der über einen zweite Stelze (23) sich auf das Gestell (24) abstützt,
- die beiden Stelzen (22, 23) untereinander in der gleichen Achse liegen, die auch die Richtung der virtuellen Bewegung der Referenzmasse (19) und jene der Wirkungsgeraden W ist.

8. Wägeeinrichtung nach Patentanspruch 7, dadurch gekennzeichnet, dass der Kraftaufnehmer (21) ein Kraftaufnehmer mit mindestens einer querschwingenden Saite ist.

9. Verfahren zur Ermittlung des Gewichtes des Inhaltes eines von einer Wägeeinrichtung gemäss Patentanspruch 1 mit mindestens einem Schwenkarm (2) gehobenen Behälters (5) dadurch gekennzeichnet, dass
- während des Hebevorganges des vollen Behälters (5) laufend die auf den Kraftaufnehmer (11) wirkende Kraft gemessen und durch die elektronischen Rechenmittel berechnet und gespeichert wird,
- jedes Messresultat mit dem vorherigen und dem nachfolgenden verglichen wird,
- das grösste gemessene Resultat dem Gewicht des vollen Behälters (5) zugeordnet wird,
- nach dem Leeren des Behälters (5) wiederum laufend die auf den Kraftaufnehmer (11) wirkende Kraft gemessen und durch die elektronischen Rechenmittel berechnet und gespeichert wird,
- jedes Messresultat mit dem vorherigen und dem nachfolgenden verglichen wird,
- das grösste gemessene Resultat dem Gewicht des leeren Behälters (5) zugeordnet wird,
- die Differenz der zwei so ermittelten grössten Resultate dem Gewichte des Inhaltes des Behälters (5) zugeordnet und gespeichert wird.

10. Verfahren zur Ermittlung des Gewichtes des Inhaltes eines von einer Wägeeinrichtung gemäss Patentanspruch 1 mit mindestens einem Schwenkarm (2) gehobenen Behälters (5) dadurch gekennzeichnet, dass
- während des Hebevorganges des leeren Behälters (5) laufend die auf den Kraftaufnehmer (11) wirkende Kraft gemessen und durch die elektronischen Rechenmittel berechnet und gespeichert wird,
- jedes Messresultat mit dem vorherigen und dem nachfolgenden verglichen wird,
- das grösste gemessene Resultat dem Gewicht des leeren Behälters (5) zugeordnet wird,
- nach dem Füllen des Behälters (5) wiederum laufend die auf den Kraftaufnehmer (11) wirkende Kraft gemessen und durch die elektronischen Rechenmittel berechnet und gespeichert wird,
- jedes Messresultat mit dem vorherigen und dem nachfolgenden verglichen wird,
- das grösste gemessene Resultat dem Gewicht des vollen Behälters (5) zugeordnet wird,
- die Differenz der zwei so ermittelten grössten Resultate dem Gewichte des Inhaltes des Behälters (5) zugeordnet und gespeichert wird.

11. Verfahren zur Ermittlung des Gewichtes des Inhaltes eines von einer Wägeeinrichtung gemäss Patentanspruch 7 mit mindestens einem Schwenkarm (2) gehobenen Behälters (5) dadurch gekennzeichnet, dass
- das Gewicht der Referenzmasse (19) bei horizontal stehenden Biegestäben (17) rechnerisch auf 1.000 normiert wird,
- während des Hebevorganges das Verhältnis der durch den Kraftaufnehmer (11) der Lastmessvorrichtung und den Kraftaufnehmer (21) des Beschleunigungsmessers (16) gemessenen Kräfte rechnerisch gebildet und daraus die Masse der gehobenen Last ermittelt wird,
- nach Unterschreiten einer vorgegebenen Abweichung des Messresultates des Beschleunigungsmessers (16) vom Werte 1.000 das Mittel über eine vorgegebene Anzahl von Massenresultaten gebildet und das Mittel als gültiges Massenresultat gespeichert wird,
- die Differenz der gültigen Massenresultate, die beim Heben und beim Senken des Schwenkarmes (2) ermittelt und gespeichert werden, gebildet wird, die der Masse des Inhaltes des Behälters (5) entspricht.

12. Verfahren nach Patentanspruch 11, dadurch gekennzeichnet, dass beim Vorliegen zweier Schwenkarme (2) die Summe der Resultate gebildet wird.

13. Verfahren nach Patentanspruch 11, dadurch gekennzeichnet, dass die vorgegebene Abweichung 0.040 beträgt.

14. Verfahren nach Patentanspruch 11, dadurch gekennzeichnet, dass die vorgegebene Abweichung 0.13 beträgt.

15. Verfahren nach Patentanspruch 11, dadurch gekennzeichnet, dass die vorgegebene Abweichung zwischen 0.02 und 0.13 liegt.

## Claims

1. Weighing apparatus for a lifting device for containers (5) which swivels about an approximately horizontal axle (6), with at least one swivel arm (2) and electronic means for the calculation and storage of weight measurements, characterised in that
- integrated in the swivel arm (2) is a force measuring device, through which extend all the lines of force of the swivel arm, the said force measuring device comprising two substantially parallel flexible rods (7) which together form the primary springs of an elastic force base and with two spring tongues (8) arranged underneath one another and parallel to the flexible rods (7) which together form the secondary springs of the elastic force base, with a force transducer (11) fitted between the said spring tongues (8) so that the force measuring device of the force transducer (11) defines a straight line of action W, and with one spring tongue (8) secured to the part of the swivel arm (2) on the axle side and the other to the part of the swivel arm (2) on the load side,
- the two flexible rods (7) are constituent parts of the swivel arm (2) and are integrated within it so that they lie horizontally in a central operating position of the swivel arm (2),
- the force transducer (11) is fitted between the spring tongues (8) so that the force acting on it, and thus the straight line of action W, are perpendicular to the direction of the flexible rods (7), so that in the aforementioned central operating position of the swivel arm (2) it therefore measures a force acting vertically.

2. Weighing apparatus according to patent claim 1, characterised in that in the central operating position of the swivel arm (2) the upper spring tongue (8) is secured to the swivel arm (2) on the axle side and the lower spring tongue (8) is secured to the swivel arm (2) on the load side.

3. Weighing apparatus according to patent claim 1, characterised in that in the central operating position of the swivel arm (2) the lower spring tongue (8) is secured to the swivel arm (2) on the axle side and the upper spring tongue (8) is secured to the swivel arm (2) on the load side.

4. Weighing apparatus according to patent claim 1, characterised in that the force transducer (11) is a force transducer with at least one transversely-vibrating string.

5. Weighing apparatus according to any one of patent claims 1 to 4, characterised in that the weighing apparatus has two swivel arms which operate in parallel and can be rotated about the same axle (6).

6. Weighing apparatus according to patent claim 6, characterised in that the measurement results of both force transducers (11) are added to determine the total weight.

7. Weighing apparatus according to patent claim 1, characterised in that
- an accelerometer (16) is provided and secured to the swivel arm (2)
- this accelerometer (16) comprises a frame (21) to which is articulated a reference mass (19) through two substantially parallel connecting rods (20), the said reference mass (19) exerting pressure via a first stilt (22) on a force transducer (21) which is braced against the frame (24) via a second stilt (23),
- the two stilts (22, 23) lie beneath each other in the same axis which is also the direction of virtual movement of the reference mass (19) and that of the straight line of action W.

8. Weighing apparatus according to patent claim 7, characterised in that the force transducer (21) is a force transducer with at least one transversely-vibrating string.

9. Method for the determination of the weight of the content of a container (5) lifted by at least one swivel arm (2) of a weighing apparatus according to patent claim 1, characterised in that
- during the lifting of the full container (5) the force acting on the force transducer (11) is measured continually, calculated by the electronic computing means and stored,
- each measured value is compared to the preceding and following value,
- the highest measured value is assigned to the weight of the full container (5),
- after emptying of the container (5) the force acting on the force transducer (11) is again continually measured, calculated by the electronic computing means and stored,
- the highest measured value is assigned to the weight of the empty container (5),
- the difference between the two highest values so derived is assigned to the weight of the content of the container (5) and stored.

10. Method for the determination of the weight of the content of a container (5) lifted by at least one swivel arm (2) of a weighing apparatus according to patent claim 1, characterised in that
- during lifting of the empty container (5) the force acting on the force transducer (11) is measured continually, calculated by the electronic computing means and stored,
- each measured value is compared to the preceding and following value,
- the highest measured value is assigned to the weight of the empty container (5),
- after filling of the container (5) the force acting on the force transducer (11) is again continually measured, calculated by the electronic computing means and stored,
- each measured value is compared to the preceding and following value,
- the highest measured value is assigned to the weight of the full container (5),
- the difference between the two highest values so derived is assigned to the weight of the content of the container (5) and stored.

11. Method for the determination of the weight of the content of a container (5) lifted by at least one swivel arm (2) of a weighing apparatus according to patent claim 7, characterised in that
- the weight of the reference mass (19) is assigned a standard value of 1.000 by computation when the flexible rods (17) are in a horizontal position,
- during the lifting process the ratio of the forces measured by the force transducer (11) of the load measuring device and the force transducer (21) of the accelerometer (16) is derived by computation and the mass of the load lifted determined therefrom,
- once the measured value of the accelerometer (16) falls within a predefined deviation from the value 1.000, the mean of a predefined number of mass values is derived and that mean stored as the valid mass value,
- the difference between the valid mass values derived and stored upon lifting and lowering of the swivel arm (2) is determined and corresponds to the mass of the content of the container (5).

12. Method according to patent claim 11, characterised in that where two swivel arms (2) are provided the sum of the measured values is derived.

13. Method according to patent claim 11, characterised in that the pre-defined deviation is 0.040.

14. Method according to patent claim 11, characterised in that the pre-defined deviation is 0.13.

15. Method according to patent claim 11, characterised in that the pre-defined deviation lies between 0.02 and 0.13.

## Revendications

1. Dispositif de pesage pour un dispositif de levage pivotant autour d'un axe (6) approximativement horizontal et prévu pour des récipients (5), comportant au moins un bras pivotant (2) et des moyens électroniques pour calculer et mémoriser les résultats des pesées, caractérisé en ce que
- le bras pivotant (2) contient, de façon intégrée, un dispositif de mesure de force dans lequel passe la totalité des forces du bras pivotant et qui se compose de deux barres de flexion (7) sensiblement parallèles qui constituent ensemble le ressort primaire d'un dispositif élastique de démultiplication de force, et de deux lames flexibles (8) l'une au-dessous de l'autre et parallèles aux barres de flexion (7), qui constituent ensemble le ressort secondaire du dispositif élastique de démultiplication de force et entre lesquelles est monté un transducteur de force (11) dont la direction de mesure de force définit une ligne d'action W, une lame flexible (8) étant fixée à la partie du côté axe et l'autre à la partie du côté charge du bras pivotant (2),
- les deux barres de flexion (7) font partie du bras pivotant (2) et y sont intégrées de manière à être horizontales dans une position de travail moyenne du bras pivotant (2),
- le transducteur de force (11) est monté entre les lames flexibles (8) de telle manière que la force qui agit sur lui, et par conséquent également la ligne d'action W, soient perpendiculaires à la direction des barres de flexion (7) et qu'il mesure donc, dans ladite position de travail moyenne du bras pivotant (2), une force verticalement orientée.

2. Dispositif de pesage selon la revendication 1, caractérisé en ce que, dans la position de travail moyenne du bras pivotant (2), la lame flexible supérieure (8) est fixée au bras pivotant (2) côté axe et la lame flexible inférieure (8) côté charge.

3. Dispositif de pesage selon la revendication 1, caractérisé en ce que, dans la position de travail moyenne du bras pivotant (2), la lame flexible inférieure (8) est fixée au bras pivotant (2) côté axe et la lame flexible supérieure (8) côté charge.

4. Dispositif de pesage selon la revendication 1, caractérisé en ce que le transducteur de force (11) est un transducteur de force avec au moins un fil à vibration transversale.

5. Dispositif de pesage selon l'une des revendications 1 à 4, caractérisé en ce que le dispositif de pesage comporte deux bras pivotants fonctionnant en parallèle et propres à tourner autour du même axe (6).

6. Dispositif de pesage selon la revendication 5, caractérisé en ce que les résultats des mesures des deux transducteurs de force (11) sont additionnés pour déterminer le poids total.

7. Dispositif de pesage selon la revendication 1, caractérisé en ce que
- il est prévu un accéléromètre (16) qui est fixé sur le bras pivotant (2),
- cet accéléromètre (16) se compose d'une armature (21) au niveau de laquelle est guidée de manière articulée, au moyen de deux bras de suspension (20) sensiblement parallèles, une masse de référence (19) qui pèse par l'intermédiaire d'une première barrette (22) sur un transducteur de force (21), lequel prend appui sur l'armature (24) par l'intermédiaire d'une seconde barrette (23),
- les deux barrettes (22, 23) sont situées l'une au-dessous de l'autre dans le même axe, qui est également la direction du mouvement virtuel de la masse de référence (19) et celle de la ligne d'action W.

8. Dispositif de pesage selon la revendication 7, caractérisé en ce que le transducteur de force (21) est un transducteur de force avec au moins un fil à vibration transversale.

9. Procédé pour la détermination du poids du contenu d'un récipient (5) levé par un dispositif de pesage selon la revendication 1 et comportant au moins un bras pivotant (2), caractérisé en ce que
- pendant l'opération de levage du récipient (5) plein, la force qui agit sur le transducteur de force (11) est mesurée en continu et est calculée et mémorisée par les moyens de calcul électroniques,
- chaque résultat de mesure est comparé au précédent et au suivant,
- le résultat mesuré le plus grand est associé au poids du récipient (5) plein,
- après le vidage du récipient (5), la force qui agit sur le transducteur de force (11) est de nouveau mesurée en continu et calculée et mémorisée par les moyens de calcul électroniques,
- chaque résultat de mesure est comparé au précédent et au suivant,
- le résultat mesuré le plus grand est associé au poids du récipient (5) vide,
- la différence des deux résultats les plus grands ainsi déterminés est associée au poids du contenu du récipient (5) et mémorisée.

10. Procédé pour la détermination du poids du contenu d'un récipient (5) levé par un dispositif de pesage selon la revendication 1 et comportant au moins un bras pivotant (2), caractérisé en ce que
- pendant l'opération de levage du récipient (5) vide, la force qui agit sur le transducteur de force (11) est mesurée en continu et est calculée et mémorisée par les moyens de calcul électroniques,
- chaque résultat de mesure est comparé au précédent et au suivant,
- le résultat mesuré le plus grand est associé au poids du récipient (5) vide,
- après le remplissage du récipient (5), la force qui agit sur le transducteur de force (11) est de nouveau mesurée en continu et est calculée et mémorisée par les moyens de calcul électroniques,
- chaque résultat de mesure est comparé au précédent et au suivant,
- le résultat mesuré le plus grand est associé au poids du récipient (5) plein,
- la différence des deux résultats les plus grands ainsi déterminés est associée au poids du contenu du récipient (5) et est mémorisée.

11. Procédé pour la détermination du poids du contenu d'un récipient (5) levé par un dispositif de pesage selon la revendication 7 et comportant au moins un bras pivotant (2), caractérisé en ce que
- le poids de la masse de référence (19) est réglé par le calcul à 1,000 pour des barres de flexion (17) en position horizontale,
- pendant l'opération de levage, le rapport entre les forces mesurées par le transducteur de force (11) du dispositif de mesure de charge et par le transducteur de force (21) de l'accéléromètre (16) est établi par le calcul et la masse de la charge levée est ainsi déterminée,
- lorsqu'un écart prédéfini du résultat de mesure de l'accéléromètre (16) par rapport à la valeur 1,000 est dépassée vers le bas, la moyenne est établie sur un nombre prédéfini de résultats de masse et la moyenne est mémorisée en tant que résultat de masse valable,
- la différence des résultats de masse valables qui sont déterminés et mémorisés lors de la montée et de la descente du bras pivotant (2) est établie et elle correspond à la masse du contenu du récipient (5).

12. Procédé selon la revendication 11, caractérisé en ce que, en présence de deux bras pivotants (2), la somme des résultats est établie.

13. Procédé selon la revendication 11, caractérisé en ce que l'écart prédéfini est de 0,040.

14. Procédé selon la revendication 11, caractérisé en ce que l'écart prédéfini est de 0,13.

15. Procédé selon la revendication 11, caractérisé en ce que l'écart prédéfini se situe entre 0,02 et 0,13.
